# FASCICULE DE BREVET EUROPEEN

(11) **EP 3 237 340 B1**
(45) Date de publication et mention de la délivrance du brevet: **21.04.2021**
(21) Numéro de dépôt: 15832811.2
(22) Date de dépôt: 21.12.2015
(51) Int. Cl.: C02F 5/08

(54) **DISPOSITIF AVEC AGENT ANTITARTRE BIODEGRADABLE**
VORRICHTUNG MIT EINEM BIOLOGISCH ABBAUBAREN KESSELSTEINHEMMER
DEVICE WITH BIODEGRADABLE SCALE-INHIBITING AGENT

(30) Priorité: 23.12.2014 FR 1463269
(43) Date de publication de la demande: 01.11.2017
(73) Titulaire: SEB S.A., 69130 Ecully (FR); Epf Innovation, 92330 Sceaux (FR)
(72) Inventeur: CHAUSSEMIER, Marie, 75008 Paris (FR); CHEAP-CHARPENTIER, Hélène, 75013 Paris (FR); HORNER, Olivier, 75018 Paris (FR); GELUS, Dominique, 38780 Pont-Eveque (FR); PECOUL, Nathalie, 69006 Lyon (FR)
(74) Mandataire: SEB Développement
(86) Numéro de dépôt international: PCT/FR2015/053693
(87) Numéro de publication internationale: WO 2016/102869

(56) Documents cités:
- EP-A1- 0 089 256
- FR-A- 405 676
- GB-A- 1 258 068

## Description

La présente invention se rapporte de manière générale au domaine technique des dispositifs destinés à contenir ou à faire circuler un milieu aqueux, dans lesquels on utilise un agent antitartre biodégradable au moins partiellement soluble dans l'eau pour éviter la formation et le dépôt de tartre.

La présente invention concerne également un procédé pour inhiber la formation et le dépôt de tartre dans des dispositifs destinés à contenir ou à faire circuler un milieu aqueux, ainsi qu'un procédé pour limiter l'accumulation de particules dans un bouilleur ou un distillateur, ou pour limiter l'accumulation d'extraits secs dans un évaporateur instantané, ces procédés mettant en œuvre un agent antitartre biodégradable au moins partiellement soluble dans l'eau.

Par substance biodégradable, on entend, au sens de la présente invention, toute substance pouvant être décomposée sous l'action de microorganismes. Le résultat est la formation d'eau, de dioxyde de carbone, et/ou de méthane, et éventuellement de sous-produits (résidus, biomasse) non toxiques pour l'environnement.

Par tartre, on entend, au sens de la présente invention, tout dépôt à base essentiellement de carbonate de calcium CaCO₃ qui se forme à partir des ions Ca²⁺ naturellement présents dans les milieux aqueux. Ces dépôts sont sous forme de particules ou d'accumulations solides en divers endroits sur des surfaces en métal, en céramique ou en matière plastique, qui sont en contact avec des milieux aqueux. Ces dépôts de CaCO₃ sont de nature à diminuer les performances d'un dispositif et à conduire à un vieillissement prématuré de certaines pièces, diminuant ainsi la durée de vie du dispositif, ou de nature à créer des particules gênantes pour le consommateur.

Le carbonate de calcium existe sous trois formes cristallines différentes qui sont dépendantes des conditions de l'environnement de formation:
▪ la calcite qui est le polymorphe du CaCO₃ le plus stable thermodynamiquement, a une structure cristalline rhomboédrique qui apparaît sous forme de cube au microscope électronique à balayage (MEB),
▪ l'aragonite a une structure cristalline orthorhombique et se présente sous forme d'aiguille au MEB, et
▪ la vatérite possède une structure cristalline hexagonale et se présente sous forme de roses des sables au MEB.

Par agent antitartre, on entend, au sens de la présente invention, toute substance apte à inhiber la formation de tartre, en retardant la précipitation du carbonate de calcium et/ou en ralentissant sa cinétique de précipitation une fois que celle-ci a démarré et/ou en modifiant la taille finale des cristaux de CaCO₃.

Un agent antitartre peut interagir avec les surfaces actives des cristaux de carbonate de calcium provoquant ainsi l'inhibition de leur croissance, et/ou un changement de conformation spatiale.

La formation de tartre est un problème majeur dans de nombreuses industries et installations domestiques. L'utilisation d'inhibiteurs efficaces (communément appelés « agents antitartre ») peut prolonger la durée de vie des dispositifs et équipements concernés.

Pour supprimer ou au moins réduire le dépôt de tartre dans des dispositifs destinés à contenir ou à faire circuler un milieu aqueux, et notamment dans des appareils électroménagers tels que les fers à repasser ou les cafetières, différents moyens ont déjà été proposés. Ainsi, on connaît des dispositifs traitant l'eau pour empêcher la précipitation du tartre par voie chimique préalablement à la vaporisation. Ces dispositifs de traitement de l'eau présentent toutefois l'inconvénient majeur de nécessiter l'ajout d'un produit acide délicat à manipuler.

Il est connu par ailleurs d'utiliser des polyphosphates ou de l'hexamétaphosphate de sodium (HMPS), car ils ralentissent la croissance des cristaux de CaCO₃ (comme illustré dans les documents brevet WO 98/28485 et EP 1 146 164). Cependant, l'effet de ces polyphosphates n'est pas démontré dans un générateur de vapeur où la cuve concentre les minéraux à une température de 140°C.

Les phosphonates ont une action similaire aux polyphosphates, mais avec une stabilité thermique supérieure. En particulier, les documents brevet EP 0 610 997 et US 5,507,108 décrivent l'utilisation de phosphonates disposés dans le réservoir d'un fer à repasser pour réduire le dépôt de tartre dans le système d'alimentation d'eau situé entre le réservoir et la chambre de vaporisation. Cependant, bien que la dissolution dans l'eau de ces produits soit lente et permette au fer de conserver une longue durée de vie, la dissolution est plus rapide au début de l'utilisation et l'effet diminue trop vite pour que le fer atteigne une durée de vie normale. Les produits préconisés doivent être pastillés ; cependant, cette forme ne facilite pas le contrôle de la dissolution de ces produits dans l'eau, et oblige à réaliser des mélanges de sels divers et complexes.

Les phosphonocarbonates, les polymères carboxyliques (comme enseigné par le document brevet EP 1 418 253) et les polyamines aliphatiques sont également connus pour leur activité antitartre

Le document FR 405 676 A décrit un procédé d'extraction d'un agent détartrant d'origine naturelle avec acide chlorhydrique.

Cependant, l'utilisation même d'agents antitartre impacte l'environnement, ce qui a eu pour conséquence d'accroître la demande pour des systèmes permettant la maîtrise des quantités d'agent antitartre utilisées (systèmes dits à relargage contrôlé).

Ainsi par exemple, le document brevet WO 98/28485 décrit un appareil électroménager en contact avec un milieu aqueux, comportant un circuit d'eau traversant un compartiment dans lequel est introduit un dispositif antitartre à relargage contrôlé. Ce dispositif est formé par une matrice silicone dans laquelle est dispersée une matière active antitartre. Cette matière active, de type phosphate (en particulier de l'hexamétaphosphate de sodium), est relarguée hors de la matrice silicone de manière contrôlée et adaptée en fonction du volume d'eau. Le document brevet US 5,507,108 décrit un fer à repasser comprenant notamment un système pour le dosage de l'injection d'un composé de phosphonate dans le réservoir. Enfin, le document brevet FR 2785166 décrit une cafetière goutte-à-goutte comportant un réservoir d'eau alimentant un chauffe-eau à circulation continue et un dispositif de traitement de l'eau du réservoir consistant en un dispositif pour le microdosage d'une quantité d'agent antitartre qui est adaptée au volume d'eau fourni au chauffe-eau.

De tels systèmes sont toutefois complexes, et utilisent des produits connus pour impacter l'environnement, et exigent parfois de la part de l'utilisateur des opérations de maintenance.

La demanderesse a découvert que l'introduction, dans un dispositif destiné à contenir ou à faire circuler un milieu aqueux, d'un agent antitartre biodégradable et au moins partiellement soluble dans l'eau permet de pallier les problèmes précités, tout en améliorant le confort d'utilisation dudit dispositif par réduction des opérations de maintenance et de son impact environnemental. En outre, les agents antitartre selon l'invention sont des produits ayant un cout faible et sont tels qu'ils sont encore actifs et ne colorent pas l'eau pour des températures supérieures à 100°C.

Par exemple, dans le cas d'un générateur de vapeur d'un appareil de repassage, l'utilisation d'un tel agent antitartre permet d'éviter au consommateur d'avoir à intervenir sur la cuve sous pression, ce qui est une opération fastidieuse et anxiogène, et que l'utilisateur renonce le plus souvent à effectuer (au détriment de l'accumulation de tartre à l'intérieur de la cuve du générateur de vapeur). L'utilisation d'un tel agent a aussi pour effet de ne plus provoquer de rejet de particules de tartre visibles au travers des trous de la semelle du fer à repasser.

Plus particulièrement, la présente invention a pour objet un dispositif destiné à contenir ou à faire circuler un milieu aqueux comprenant un système aqueux, le système aqueux comprenant au moins un agent antitartre.

Par système aqueux, on entend au sens de la présente invention un système comprenant tout élément structurel destiné à recevoir et/ou alimenter et/ou contenir et/ou faire circuler et/ou faire séjourner un milieu aqueux.

Selon l'invention, l'agent antitartre est un agent biodégradable, qui est au moins partiellement, et de préférence complètement soluble dans l'eau.

Par rapport aux agents antitartre classiquement utilisés dans le domaine des dispositifs destinés à contenir ou à faire circuler un milieu aqueux (par exemple ceux à base de dérivés phosphatés, ou de phosphocarbonates, de polymères carboxyliques ou encore de polyamines aromatiques), les agents antitartre utilisables dans le cadre de la présente invention présentent une efficacité au moins égale, tout en permettant d'éliminer les opérations de maintenance sur le dispositif. En outre, ils présentent un impact environnemental réduit car ils sont biodégradables, et nécessairement inoffensifs pour l'homme.

Selon l'invention, l'agent antitartre est un agent biodégradable comprenant au moins l'un
- de l'acide caféique,
- de l'acide malonique,
- d'une inuline de carboxyméthyle,
- d'un extrait de *Spergularia,* de préférence un extrait de *Spergularia Rubra,*
- d'un extrait d'*Arenaria,* de préférence un extrait d'*Arenaria Rubra,*
- d'un extrait de *Parietaria,* de préférence un extrait de *Parietaria Officinalis,*
- d'un extrait d'*Herniaria,* de préférence un extrait d'*Herniaria Hirsuta,*
- d'un extrait d'une plante de la famille *Moraceae,* de préférence un extrait de *Ficus,* de préférence un extrait de *Ficus Carica,*
- d'un extrait d'une plante de la famille *Poaceae,* de préférence un extrait de *Zea,* de préférence un extrait de *Zea Mays,*
- d'un extrait d'une plante de la famille *Apiaceae,* de préférence un extrait de *Visnaga,* de préférence un extrait d'*Ammi Visnaga,*

Les inulines de carboxyméthyle (CMI) peuvent être par exemple extraites des racines de plantes telles que la chicorée ou le pissenlit, soit être synthétisées en laboratoire.

L'agent biodégradable peut en outre comprendre au moins l'un de l'acide citrique, de l'acide tartrique, de l'Aloe vera, de l'acide poly-aspartique (PASP), du xanthane, de l'acide humique, de l'acide folique, de l'acide polymaléique, de l'acide polyépoxysuccinique, de la leucine, d'un extrait de gambier, d'un extrait d'*Olea*, de préférence un extrait d'*Olea Europaea* tel que l'olivier, d'un extrait de *Paronychia,* de préférence un extrait de *Paronychia Argentea.*

Dans le cas où l'agent antitartre est réalisé à base de plantes, telles l'*Arenaria,* le *Parietaria,* l'*Olea,* le gambier et le *Paronychia,* les principes actifs de ces plantes pourront être utilisés sous forme purifiée pour obtenir une plus grande efficacité.

L'agent antitartre selon l'invention peut agir contre la formation de tartre selon plusieurs modes d'actions possibles (vitesse de formation, forme cristallographique, taille...), seuls ou combinés entre eux :
▪ il peut retarder la précipitation des cristaux de carbonate de calcium CaCO₃, par exemple en modifiant leur forme (ce qui peut retarder, voire empêcher, leur développement),
▪ il peut réduire la cinétique de précipitation du CaCO₃, une fois que celle-ci a démarré,
▪ la taille finale des cristaux peut également être modifiée, ce qui peut empêcher l'entraînement et le dépôt de particules visibles sur le linge.

Il peut donc être avantageux de combiner un agent antitartre qui retarde la formation des cristaux de CaCO₃ avec un autre agent antitartre qui agit plutôt sur sa cinétique de formation. Ainsi, une inuline de carboxyméthyle peut avantageusement être utilisée en combinaison avec l'Aloe vera. De même, au moins l'un d'un extrait d'*Arenaria et* d'un extrait de *Parietaria* peut avantageusement être utilisé en combinaison avec de l'acide citrique.

Les extraits de plantes mentionnés ci-dessus sont obtenus en broyant la matière végétale (notamment les sommités fleuries, les fleurs, les feuilles, les écorces) récoltée à partir de ces plantes, puis en la faisant infuser selon des proportions et des durées choisies, et enfin en la filtrant afin d'éliminer les résidus de l'infusion. Les extraits aqueux ainsi obtenus comprennent les principes actifs de la matière végétale qui constituent l'agent antitartre.

Afin d'optimiser les résultats obtenus par les extraits aqueux issus de la filtration, lesdits extraits aqueux peuvent être soumis à une étape de fractionnement afin d'isoler les principes actifs agissant comme agent antitartre. Une telle étape de fractionnement peut par exemple être une étape de partition liquide-liquide avec du n-butanol.

De préférence, les agents antitartre utilisés dans la présente invention sont de nature alimentaire.

Par substance alimentaire, on entend, au sens de la présente invention, toute substance ou produit, transformé, partiellement transformé ou non transformé, destiné à être ingéré ou raisonnablement susceptible d'être ingéré par l'être humain.

Avantageusement, l'agent antitartre peut être présent dans le système aqueux à une teneur supérieure ou égale à 0,5 ppm et inférieure ou égale à 1000 ppm, et de préférence supérieure ou égale à 0,5 ppm et inférieure ou égale à 500 ppm. Au-dessous de 0,5 ppm, l'agent antitartre ne serait pas efficace, tandis qu'au-dessus de 1000 ppm, cela impliquerait une quantité trop importante d'agent antitartre à inclure dans le dispositif par rapport à l'effet produit.

Selon un mode de réalisation, le système aqueux comprend :
- des moyens destinés à faire bouillir et/ou évaporer et/ou chauffer le milieu aqueux,
- un réservoir destiné à contenir le milieu aqueux et/ou un système de circulation du milieu aqueux, et éventuellement
- un système d'alimentation en milieu aqueux,

le réservoir et/ou le système de circulation et/ou le système d'alimentation comprenant l'agent antitartre.

A titre de dispositifs utilisables dans ce mode de réalisation, on peut notamment citer les appareils électroménagers, les bouilleurs, les évaporateurs instantanés et les distillateurs.

Les moyens pour faire bouillir et/ou évaporer et/ou chauffer le milieu aqueux sont par exemple une chambre de vaporisation si le dispositif est un générateur de vapeur d'appareil de repassage ou, lorsque le dispositif est une bouilloire électrique, une résistance électrique généralement située dans le réservoir d'eau.

A titre d'appareils électroménagers utilisables dans le cadre de la présente invention, on peut notamment citer les fers à vapeur, les centrales à vapeur ou générateurs de vapeur, les nettoyeurs vapeur, les défroisseurs vapeur, les aspirateurs vapeur, les appareils domestiques de traitement de l'eau du robinet, les fours vapeur, les cuiseurs vapeur, les stérilisateurs, les jets dentaires, les fontaines distribuant de l'eau froide et/ou de l'eau chaude, les cafetières, les théières, les bouilloires, et encore les appareils pour le soin de la personne tels qu'un lisseur à vapeur.

A titre de bouilleurs et distillateurs utilisables dans le cadre de la présente invention, on peut notamment citer les centrales de dessalement d'eau de mer mettant en jeu une prise d'eau de mer avec une pompe et une filtration grossière, un prétraitement avec une filtration plus fine et l'addition notamment de l'agent antitartre, et le procédé de dessalement par distillation de l'eau de mer.

Selon un autre mode de réalisation, le système aqueux comprend :
- des moyens destinés à refroidir le milieu aqueux,
- un réservoir destiné à contenir le milieu aqueux et/ou un système de circulation du milieu aqueux, et éventuellement
- un système d'alimentation en milieu aqueux,

le réservoir et/ou le système de circulation et/ou le système d'alimentation comprenant l'agent antitartre.

A titre de dispositifs utilisables dans cet autre mode de réalisation, on peut notamment citer les circuits de refroidissement, notamment pourvus d'un condenseur et/ou d'une tour aéroréfrigérante, rejetant sa purge dans le milieu naturel.

A titre de circuits de refroidissement utilisables dans le cadre de la présente invention, on peut notamment citer les circuits de refroidissement d'électricité (dits « circuits tertiaires ») alimentés en eau brute de rivière ou en eau prétraitée dans les centrales nucléaires ou thermiques de production d'électricité.

La présente invention a également pour objet un procédé pour inhiber la formation et le dépôt de tartre dans un dispositif destiné à contenir ou à faire circuler un milieu aqueux, comprenant l'introduction puis la diffusion dans ledit milieu aqueux à traiter d'un agent antitartre en vue d'y inhiber la formation et le dépôt de carbonate de calcium (CaCO₃).

L'agent antitartre est tel que défini ci-dessus en référence au dispositif destiné à contenir ou à faire circuler un milieu aqueux.

Le dispositif destiné à contenir ou à faire circuler un milieu aqueux est tel que défini précédemment.

La présente invention a également pour objet un procédé pour limiter l'accumulation de particules dans un bouilleur ou un distillateur, ou pour limiter l'accumulation d'extraits secs dans un évaporateur instantané, comprenant l'introduction puis la diffusion dans ledit milieu aqueux à traiter d'un agent antitartre en vue d'y inhiber la formation et le dépôt de carbonate de calcium (CaCO₃).

L'agent antitartre est tel que défini ci-dessus en référence au dispositif destiné à contenir ou à faire circuler un milieu aqueux.

Quel que soit le procédé envisagé, l'agent antitartre peut avantageusement être introduit dans le milieu aqueux en une teneur supérieure ou égale à 0,5 ppm et inférieure ou égale à 1000 ppm, et de préférence supérieure ou égale à 0,5 ppm et inférieure ou égale à 500 ppm.

En outre, quel que soit le procédé envisagé, l'agent antitartre pourra être de préférence introduit sous forme liquide dans le milieu aqueux, cette introduction pouvant se faire par exemple par microdosage, en mode manuel ou automatique.

Mais il peut également être possible d'introduire l'agent antitartre dans le milieu aqueux sous forme solide, par exemple dans une matrice de relargage, ou dilué dans une structure poreuse, ou encore sous une forme solide disposée à l'entrée du dispositif destiné à contenir ou à faire circuler un milieu aqueux et agissant par diffusion dans le milieu aqueux.

D'autres avantages et particularités de la présente invention résulteront de la description qui va suivre, donnée à titre d'exemple non limitatif et faite en référence aux figures annexées :
- la figure 1 représente une vue schématique en coupe d'un fer vapeur classique à chambre de vaporisation instantanée, que l'on utilise pour réaliser le test sur banc d'endurance accéléré décrit ci-après,
- la figure 2 représente une photographie de l'intérieur de la chambre de vaporisation de la semelle du fer à repasser de la figure 1 après un essai sur banc d'endurance accéléré comprenant le passage de 40 litres d'eau du robinet (de dureté 27° F) sans agent antitartre (température de la semelle de l'ordre de 200°C),
- la figure 3 représente une image de microscopie électronique à balayage (MEB) représentant en détail une zone entartrée de l'intérieur de la chambre de vaporisation de la semelle du fer à repasser illustrée sur la figure 2,
- la figure 4 représente une photographie de l'intérieur de la chambre de vaporisation de la semelle du fer à repasser de la figure 1 après l'essai sur banc d'endurance accéléré comprenant le passage de 40 litres d'eau du robinet (de dureté 27° F) dans laquelle on a ajouté un autre agent antitartre selon un deuxième mode de réalisation du procédé selon l'invention,
- la figure 5 représente une image de microscopie électronique à balayage (MEB) représentant en détail une zone entartrée de l'intérieur de la chambre de vaporisation de la semelle du fer à repasser illustrée sur la figure 4,
- la figure 6 représente une photographie de l'intérieur de la chambre de vaporisation de la semelle du fer à repasser de la figure 1 après l'essai sur banc d'endurance accéléré comprenant le passage de 40 litres d'eau du robinet (de dureté 27° F) dans laquelle on a ajouté un autre agent antitartre selon un troisième mode de réalisation du procédé selon l'invention,
- la figure 7 représente une image de microscopie électronique à balayage (MEB) représentant en détail une zone entartrée de l'intérieur de la chambre de vaporisation de la semelle du fer à repasser illustrée sur la figure 6.

### Protocole expérimental du test sur banc d'endurance accéléré

Ce test d'endurance est réalisé sur un banc d'endurance accélérée.

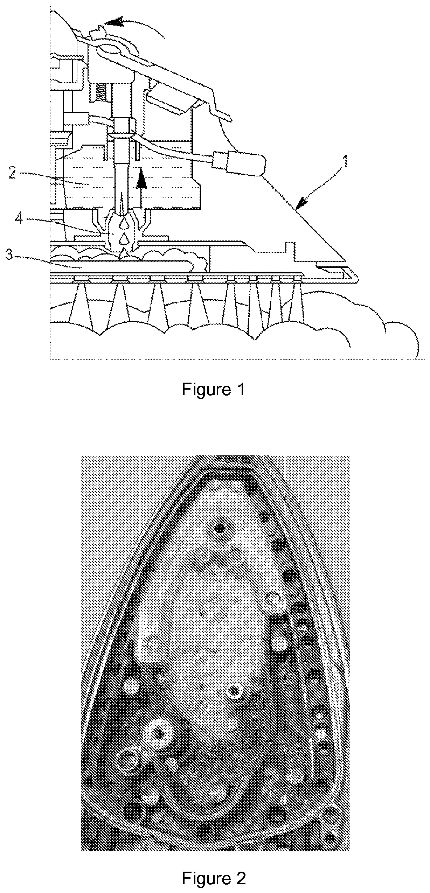

On utilise pour cela un fer vapeur (1) illustré sur la figure 1. Ce fer vapeur (1) comprend un réservoir d'eau (2) et un système d'alimentation (4) en eau communiquant avec le réservoir (2). Le fer vapeur (1) comprend en outre des moyens de chauffe (3) pour faire bouillir et/ou évaporer et/ou chauffer l'eau en provenance du réservoir (2) ou comprise dans le réservoir (2).

Le test d'endurance sur banc d'endurance accélérée consiste à injecter sous cycles alternés de 10 secondes de fonctionnement et 10 secondes d'arrêt, 40 litres d'eau du robinet (de dureté 27° F), à raison de 30g/min dans la chambre de vapeur de la semelle du fer à repasser qui reste en statique pour cumuler les dépôts. L'eau du réservoir d'eau tombe directement dans la semelle chaude du fer à repasser pour s'évaporer instantanément.

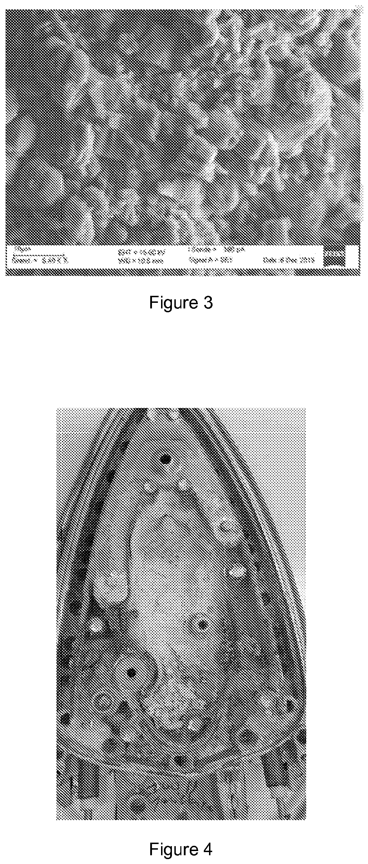

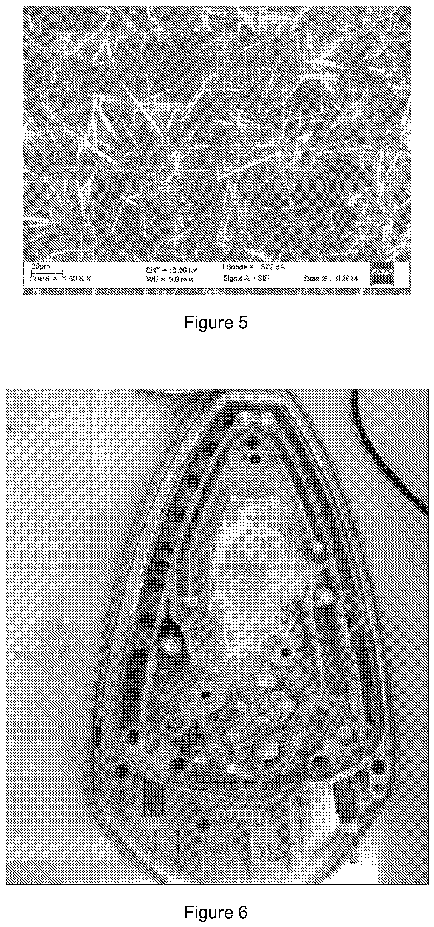

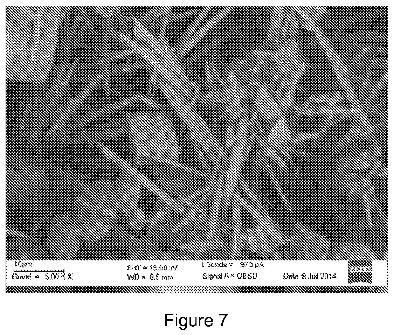

Les résultats de ce test sont illustrés sur les figures 2 à 7, qui sont commentées dans le tableau 1 de résultats ci-après.

**Tableau 1**

| Nature de l'eau | Aspect de l'intérieur de la fonderie aluminium | Aspect des cristaux de tartre visualisés au MEB |
|---|---|---|
| Sans agent antitartre | **Figure 2** | **Figure 3** |
| | La zone de vaporisation est entartrée sur plus de la moitié de sa surface. On observe une épaisse couche de tartre. Le fer ne peut plus vaporiser. | On observe la présence de cristaux cubiques de calcite (structure cristalline stable de carbonate de calcium), qui sont collés les uns aux autres. Peu de cristaux se détachent de la paroi. |
| Avec agent antitartre selon l'invention | **Figure 4** ***(300 ppm d'extrait de Parietaria)*** | **Figure 5** ***(300 ppm d'extrait de Parietaria)*** |
| | La zone de vaporisation est beaucoup moins entartrée que sur la figure 2. On note la présence de particules de calcaire non adhérentes à l'arrière de la chambre de vaporisation. | La forme des cristaux est modifiée par la présence de l'agent antitartre selon l'invention : on observe des particules libres sous forme d'aiguilles (structure cristalline différente de la calcite : aragonite). Nous avons ici un bon inhibiteur de germination (la calcite n'a pu se former) et de croissance (cristaux plus petits et non accumulables) de CaCO₃. |
| | **Figure 6** ***(200 ppm d'extrait d'Arenaria)*** | **Figure 7** ***(200 ppm d'extrait d'Arenaria)*** |
| | La zone de vaporisation est beaucoup moins entartrée que sur la figure 2. On note la présence de particules de calcaire non adhérentes a l'arrière de la chambre de vaporisation. | La forme des cristaux est modifiée par la présence de l'agent antitartre selon l'invention : on observe un mélange des trois formes caractéristiques du carbonate de calcium, avec une légère prédominance de la forme aragonite par rapport à la calcite et à la vatérite. Nous sommes ici en présence d'un bon inhibiteur de croissance et d'adhérence de CaCO₃ mais qui présente des propriétés plus faibles d'inhibition de germination de CaCO₃. |

## Revendications

1. Dispositif (1) destiné à contenir ou à faire circuler un milieu aqueux comprenant
- des moyens (3) destinés à faire bouillir et/ou évaporer et/ou chauffer le milieu aqueux, ou des moyens destinés à refroidir le milieu aqueux,
- un réservoir (2) destiné à contenir le milieu aqueux et/ou un système de circulation du milieu aqueux, et éventuellement
- un système d'alimentation (4) en milieu aqueux,
le réservoir (2) et/ou le système de circulation et/ou le système d'alimentation (4) comprenant un agent antitartre
**caractérisé en ce que** l'agent antitartre est un agent biodégradable au moins partiellement soluble dans l'eau, et **en ce que** l'agent biodégradable comprend au moins l'un de l'acide caféique, d'une inuline de carboxyméthyle, d'un extrait aqueux de plante choisi parmi les extraits aqueux de *Spergularia, d'Arenaria,* de *Parietaria, d'Herniaria,* d'une plante de la famille *Moraceae,* d'une plante de la famille *Poaceae ou* d'une plante de la famille *Apiaceae,* ledit extrait aqueux étant obtenu par broyage puis infusion dans de l'eau de la matière végétale récoltée à partir desdites plantes, et filtration pour éliminer les résidus de l'infusion et obtenir un extrait aqueux.

2. Dispositif (1) selon la revendication 1, dans lequel l'agent biodégradable est complètement soluble dans l'eau.

3. Dispositif (1) selon l'une quelconque des revendications précédentes, dans lequel l'agent biodégradable comprend au moins l'un de l'acide caféique, d'une inuline de carboxyméthyle, d'un extrait aqueux de *Spergularia,* d'un extrait aqueux *d'Arenaria,* d'un extrait aqueux de *Parietaria,* d'un extrait aqueux *d'Herniaria,* d'un extrait aqueux de *Ficus,* d'un extrait aqueux de Zea, d'un extrait aqueux de *Visnaga.*

4. Dispositif (1) selon l'une quelconque des revendications précédentes, dans lequel l'agent biodégradable comprend au moins l'un d'un extrait aqueux de *Spergularia Rubra,* d'un extrait aqueux *d'Arenaria Rubra,* d'un extrait aqueux de *Parietaria Officines,* d'un extrait aqueux *d'Herniaria Hirsuta,* d'un extrait aqueux de *Ficus Carica,* d'un extrait aqueux de *Zea Mays,* d'un extrait aqueux *d'Ammi Visnaga.*

5. Dispositif (1) selon l'une quelconque des revendications précédentes, dans lequel l'agent biodégradable comprend en outre au moins l'un de l'acide citrique, de l'acide tartrique, de l'Aloe vera, de l'acide poly-aspartique (PASP), du xanthane, de l'acide humique, de l'acide folique, de l'acide polymaléique, de l'acide polyépoxysuccinique, de la leucine, d'un extrait de gambier, d'un extrait *d'Olea*, d'un extrait de *Paronychia.*

6. Dispositif (1) selon l'une quelconque des revendications précédentes, dans lequel l'agent antitartre est présent dans le système aqueux à une teneur supérieure ou égale 0,5 ppm et inférieure ou égale à 1000 ppm.

7. Dispositif (1) selon l'une quelconque des revendications précédentes, **caractérisé en ce qu'**il s'agit d'un appareil électroménager.

8. Dispositif (1) selon la revendication 7, **caractérisé en ce qu'**il s'agit d'un fer à vapeur, d'une centrale vapeur, d'un nettoyeur vapeur, d'un défroisseur vapeur, d'un aspirateur vapeur, d'un appareil domestique de traitement de l'eau du robinet, d'un four vapeur, d'un cuiseur vapeur, d'un stérilisateur, d'un jet dentaire, d'une fontaine distribuant de l'eau froide et/ou de l'eau chaude, d'une cafetière, d'une théière, d'une bouilloire, ou encore d'un appareil pour le soin de la personne tel qu'un lisseur à vapeur.

9. Dispositif (1) selon l'une quelconque des revendications 1 à 7, **caractérisé en ce qu'**il s'agit d'un bouilleur, d'un évaporateur instantané ou d'un distillateur.

10. Dispositif selon la revendication 1, **caractérisé en ce qu'**il s'agit d'un circuit de refroidissement, notamment pourvu d'un condenseur et/ou d'une tour aéroréfrigérante, rejetant sa purge dans le milieu naturel.

11. Procédé pour inhiber la formation et le dépôt de tartre dans un dispositif (1) destiné à contenir ou à faire circuler un milieu aqueux, comprenant l'introduction puis la diffusion dans ledit milieu aqueux à traiter d'un agent antitartre en vue d'y inhiber la formation et le dépôt de carbonate de calcium (CaCO3), **caractérisé en ce que** l'agent antitartre est un agent biodégradable au moins partiellement soluble dans l'eau, et **en ce que** l'agent biodégradable comprend au moins l'un de l'acide caféique, d'une inuline de carboxyméthyle, d'un extrait aqueux de plante choisi parmi les extraits aqueux de *Spergularia, d'Arenaria,* de *Parietaria, d'Herniaria,* d'une plante de la famille *Moraceae,* d'une plante de la famille *Poaceae*, d'une plante de la famille *Apiaceae,* ledit extrait aqueux étant obtenu par broyage puis infusion dans de l'eau de la matière végétale récoltée à partir desdites plantes, et filtration pour éliminer les résidus de l'infusion et obtenir un extrait aqueux.

12. Procédé pour limiter l'accumulation de particules dans un bouilleur ou un distillateur, ou pour limiter l'accumulation d'extraits secs dans un évaporateur instantané, comprenant l'introduction puis la diffusion dans ledit milieu aqueux à traiter d'un agent antitartre en vue d'y inhiber la formation et le dépôt de carbonate de calcium (CaCO3), **caractérisé en ce que** l'agent antitartre est un agent biodégradable au moins partiellement soluble dans l'eau, et **en ce que** l'agent biodégradable comprend au moins l'un de l'acide caféique, d'une inuline de carboxyméthyle, d'un extrait aqueux de plante choisi parmi les extraits aqueux de *Spergularia, d'Arenaria,* de *Parietaria, d'Herniaria,* d'une plante de la famille *Moraceae,* d'une plante de la famille *Poaceae*, d'une plante de la famille *Apiaceae,* ledit extrait aqueux étant obtenu par broyage puis infusion dans de l'eau de la matière végétale récoltée à partir desdites plantes, et filtration pour éliminer les résidus de l'infusion et obtenir un extrait aqueux.

13. Procédé selon l'une quelconque des revendications 11 et 12, dans lequel l'agent antitartre est introduit dans le milieu aqueux en une teneur supérieure ou égale à 0,5 ppm et inférieure ou égale à 1000 ppm.

14. Procédé selon l'une quelconque des revendications 11 à 13, dans lequel l'agent antitartre est introduit sous forme liquide dans le milieu aqueux.

## Patentansprüche

1. Vorrichtung (1), die ein wässriges Medium aufnehmen oder umwälzen soll, umfassend:
- Mittel (3), mit denen das wässrige Medium zum Kochen und/oder Verdampfen gebracht und/oder erwärmt werden soll, oder Mittel, mit denen das wässrige Medium abgekühlt werden soll,
- einen Behälter (2), der das wässrige Medium und/oder ein System zum Umwälzen des wässrigen Mediums aufnehmen soll, und gegebenenfalls
- ein System zur Zufuhr (4) des wässrigen Mediums,
wobei der Behälter (2) und/oder das Umwälzsystem und/oder das Zufuhrsystem (4) ein Entkalkungsmittel umfasst,
**dadurch gekennzeichnet, dass** das Entkalkungsmittel ein biologisch abbaubares Mittel ist, das zumindest teilweise in Wasser löslich ist, und dadurch, dass das biologisch abbaubare Mittel mindestens eins aus Folgendem umfasst: Kaffeesäure, ein Carboxymethylinulin, ein wässriges Pflanzenextrakt, ausgewählt aus wässrigen Extrakten von *Spergularia, Arenaria, Parietaria, Herniaria,* einer Pflanze aus der Familie der *Moraceae,* einer Pflanze aus der Familie der *Poaceae* oder einer Pflanze aus der Familie der *Apiaceae,* wobei das wässrige Extrakt durch Zerkleinern des von den Pflanzen gesammelten pflanzlichen Materials und anschließendes Aufbrühen mit Wasser und Filtern zum Beseitigen von Brührückständen und Gewinnen eines wässrigen Extrakts gewonnen wird.

2. Vorrichtung (1) nach Anspruch 1, wobei das biologisch abbaubare Mittel vollständig in Wasser lösbar ist.

3. Vorrichtung (1) nach einem der vorstehenden Ansprüche, wobei das biologisch abbaubare Mittel mindestens eins aus Folgendem umfasst: Kaffeesäure, ein Carboxymethylinulin, ein wässriges Extrakt von *Spergularia,* ein wässriges Extrakt von *Arenaria,* ein wässriges Extrakt von *Parietaria,* ein wässriges Extrakt von *Herniaria,* ein wässriges Extrakt von *Ficus,* ein wässriges Extrakt von *Zea,* ein wässriges Extrakt von *Visnaga.*

4. Vorrichtung (1) nach einem der vorstehenden Ansprüche, wobei das biologisch abbaubare Mittel mindestens eins aus Folgendem umfasst: ein wässriges Extrakt von *Spergularia Rubra,* ein wässriges Extrakt von *Arenaria Rubra,* ein wässriges Extrakt von *Parietaria Officines,* ein wässriges Extrakt von *Herniaria Hirsuta,* ein wässriges Extrakt von *Ficus Carica,* ein wässriges Extrakt von *Zea Mays,* ein wässriges Extrakt von *Ammi Visnaga.*

5. Vorrichtung (1) nach einem der vorstehenden Ansprüche, wobei das biologisch abbaubare Mittel ferner mindestens eins aus Folgendem umfasst: Zitronensäure, Weinsäure, Aloe vera, Polyasparaginsäure (PASP), Xanthan, Huminsäure, Folsäure, Polymaleinsäure, Polyepoxybernsteinsäure, Leucin, ein Extrakt von Gambir, ein Extrakt von *Olea,* ein Extrakt von *Paronychia.*

6. Vorrichtung (1) nach einem der vorstehenden Ansprüche, wobei das Entkalkungsmittel im wässrigen System in einem Gehalt von größer gleich 0,5 ppm und kleiner gleich 1000 ppm vorliegt.

7. Vorrichtung (1) nach einem der vorstehenden Ansprüche, **dadurch gekennzeichnet, dass** es sich um ein Haushaltsgerät handelt.

8. Vorrichtung (1) nach Anspruch 7, **dadurch gekennzeichnet, dass** es sich um ein Bügeleisen, eine Dampfbügelstation, einen Dampfreiniger, einen Dampfglätter, einen Dampfsauger, ein Haushaltsgerät zur Aufbereitung von Leitungswasser, einen Dampfofen, einen Dampfkocher, einen Sterilisator, eine Munddusche, einen Brunnen für kaltes Wasser und/oder warmes Wasser, eine Kaffeemaschine, einen Teekocher, einen Wasserkocher oder auch um ein Körperpflegegerät wie einen Dampfhaarglätter handelt.

9. Vorrichtung (1) nach einem der Ansprüche 1 bis 7, **dadurch gekennzeichnet, dass** es sich um einen Siedekessel, einen Entspannungsverdampfer oder einen Destillationsapparat handelt.

10. Vorrichtung nach Anspruch 1, **dadurch gekennzeichnet, dass** es sich um einen Kühlkreislauf handelt, der insbesondere mit einem Kondensator und/oder einem Luftkühlturm versehen ist, dessen Ableitung in die natürliche Umgebung erfolgt.

11. Verfahren zum Hemmen der Ausbildung und Ablagerung von Kalk in einer Vorrichtung (1), die ein wässriges Medium aufnehmen oder umwälzen soll, das das Einbringen und anschließende Diffundieren eines Entkalkungsmittels in das zu behandelnde wässrige Medium zwecks Hemmung der Ausbildung und Ablagerung von Calciumcarbonat (CaCO3) umfasst, **dadurch gekennzeichnet, dass** das Entkalkungsmittel ein biologisch abbaubares Mittel ist, das zumindest teilweise in Wasser löslich ist, und dadurch, dass das biologisch abbaubare Mittel mindestens eins aus Folgendem umfasst: Kaffeesäure, ein Carboxymethylinulin, ein wässriges Pflanzenextrakt, ausgewählt aus wässrigen Extrakten von *Spergularia, Arenaria, Parietaria, Herniaria,* einer Pflanze aus der Familie der *Moraceae,* einer Pflanze aus der Familie der *Poaceae,* einer Pflanze aus der Familie der *Apiaceae,* wobei das wässrige Extrakt durch Zerkleinern des von den Pflanzen gesammelten pflanzlichen Materials und anschließendes Aufbrühen mit Wasser und Filtern zum Beseitigen von Brührückständen und Gewinnen eines wässrigen Extrakts gewonnen wird.

12. Verfahren zum Begrenzen des Ansammelns von Partikeln in einem Siedekessel oder einem Destillationsapparat oder zum Begrenzen des Ansammelns von Trockenextrakten in einem Entspannungsverdampfer, das das Einbringen und anschließende Diffundieren eines Entkalkungsmittels in das zu behandelnde wässrige Medium zwecks Hemmung der Ausbildung und Ablagerung von Calciumcarbonat (CaCO3) umfasst, **dadurch gekennzeichnet, dass** das Entkalkungsmittel ein biologisch abbaubares Mittel ist, das zumindest teilweise in Wasser löslich ist, und dadurch, dass das biologisch abbaubare Mittel mindestens eins aus Folgendem umfasst: Kaffeesäure, ein Carboxymethylinulin, ein wässriges Pflanzenextrakt, ausgewählt aus wässrigen Extrakten von *Spergularia, Arenaria, Parietaria, Herniaria,* einer Pflanze aus der Familie der *Moraceae,* einer Pflanze aus der Familie der *Poaceae,* einer Pflanze aus der Familie der *Apiaceae,* wobei das wässrige Extrakt durch Zerkleinern des von den Pflanzen gesammelten pflanzlichen Materials und anschließendes Aufbrühen mit Wasser und Filtern zum Beseitigen von Brührückständen und Gewinnen eines wässrigen Extrakts gewonnen wird.

13. Verfahren nach einem der Ansprüche 11 und 12, wobei das Entkalkungsmittel in das wässrige Medium in einem Gehalt von größer gleich 0,5 ppm und kleiner gleich 1000 ppm eingebracht wird.

14. Verfahren nach einem der Ansprüche 11 bis 13, wobei das Entkalkungsmittel in flüssiger Form in das wässrige Medium eingebracht wird.

## Claims

1. Device (1) intended to contain or make circulate an aqueous medium comprising
- means (3) intended to make boil and/or evaporate and/or heat the aqueous medium or means intended to cool the aqueous medium,
- a reservoir (2) intended to contain the aqueous medium and/or a system for circulating the aqueous medium, and possibly
- a system for supplying (4) with aqueous medium,
the reservoir (2) and/or the circulation system and/or the supply system (4) comprising a scale-inhibiting agent,
**characterised in that** the scale-inhibiting agent is a biodegradable agent at least partially soluble in water, and **in that** the biodegradable agent comprises at least one from caffeic acid, a carboxymethyl inulin, an aqueous plant extract selected from among the aqueous extracts of *Spergularia, Arenaria, Parietaria, Hemiaria,* a plant from the *Moraceae* family, a plant from the *Poaceae* family, or a plant from the *Apiaceae* family, said aqueous extract being obtained by grinding then infusion in water of the plant matter collected from said plants, and filtration to remove the residues from the infusion and to obtain an aqueous extract.

2. Device (1) according to claim 1, wherein the biodegradable agent is completely water-soluble.

3. Device (1) according to any one of the preceding claims, wherein the biodegradable agent comprises at least one from caffeic acid, a carboxymethyl inulin, an aqueous extract of *Spergularia,* an aqueous extract of *Arenaria,* an aqueous extract of *Parietaria,* an aqueous extract of *Herniaria,* an aqueous extract of *Ficus,* an aqueous extract of *Zea,* an aqueous extract of *Visnaga.*

4. Device (1) according to any one of the preceding claims, wherein the biodegradable agent comprises at least one from an aqueous extract of *Spergularia Rubra,* an aqueous extract of *Arenaria Rubra,* an aqueous extract of *Parietaria Officines,* an aqueous extract of *Herniaria Hirsuta,* an aqueous extract of *Ficus Carica,* an aqueous extract of *Zea Mays,* an aqueous extract of *Ammi Visnaga.*

5. Device (1) according to any one of the preceding claims, wherein the biodegradable agent further comprises at least one from citric acid, tartaric acid, aloe vera, polyaspartic acid (PASP), xanthan, humic acid, folic acid, polymaleic acid, polyepoxysuccinic acid, leucine, a gambier extract, an *Olea* extract, a *Paronychia* extract.

6. Device (1) according to any one of the preceding claims, wherein the scale-inhibiting agent is present in the aqueous system with a content greater than or equal to 0.5ppm and less than or equal to 1000ppm.

7. Device (1) according to any one of the preceding claims, **characterised in that** this is a household electrical appliance.

8. Device (1) according to claim 7, **characterised in that** this is a steam iron, a steam generator, a steam cleaner, a garment steamer, a steam vacuum cleaner, a domestic appliance for treating tap water, a steam oven, a steam cooker, a steriliser, a dental jet, a fountain dispensing cold water and/or hot water, a coffee machine, a teapot, a kettle, or also an appliance for treating a person, such as hair straighteners.

9. Device (1) according to any one of claims 1 to 7, **characterised in that** this is a boiler, an instant evaporator or a distiller.

10. Device according to claim 1, **characterised in that** this is a cooling circuit, in particular provided with a condenser and/or a cooling tower, discharging its drainage into the natural environment.

11. Method for inhibiting the formation and the deposition of scale in a device (1) intended to contain or make circulate an aqueous medium, comprising the introduction then the diffusion into said aqueous medium to treat a scale-inhibiting agent in view of inhibiting the formation and the deposition there of calcium carbonate (CaCO₃), **characterised in that** the scale-inhibiting agent is a biodegradable agent at least partially water-soluble, and **in that** the biodegradable agent comprises at least one from caffeic acid, a carboxymethyl inulin, an aqueous plant extract selected from among the aqueous extracts of *Spergularia, Arenaria, Parietaria, Hernaria,* of a plant from the *Moraceae* family, a plant from the *Poaceae* family, a plant from the *Apiaceae* family, said aqueous extract being obtained by grinding then infusion in the water of the plant matter collected from an aqueous extract.

12. Method for limiting the accumulation of particles in a boiler or a distiller, or for limiting the accumulation of dry extracts in an instant evaporator, comprising the introduction then the diffusion in said aqueous medium to treat a scale-inhibiting agent in view of inhibiting the formation and the deposition there of calcium carbonate (CaCO₃), **characterised in that** the scale-inhibiting agent is a biodegradable agent at least partially water-soluble, and **in that** the biodegradable agent comprises at least one from caffeic acid, a carboxymethyl inulin, an aqueous plant extract selected from among the aqueous extracts of *Spergularia, Arenaria, Parietaria, Hernaria,* a plant from the *Moraceae* family, a plant from the *Poaceae* family, a plant from the *Apiaceae* family, said aqueous extract being obtained by grinding then infusion in water of the plant matter collected from said plants, and filtration to remove the residues of the infusion and to obtain an aqueous extract.

13. Method according to any one of claims 11 and 12, wherein the scale-inhibiting agent is introduced into the aqueous medium in a content greater than or equal to 0.5ppm and less than or equal to 1000ppm.

14. Method according to any one of claims 11 to 13, wherein the scale-inhibiting agent is introduced in liquid form into the aqueous medium.
